# EUROPÄISCHE PATENTSCHRIFT

(11) **EP 3 273 595 B1**
(45) Veröffentlichungstag und Bekanntmachung des Hinweises auf die Patenterteilung: **21.09.2022**
(21) Anmeldenummer: 16180375.4
(22) Anmeldetag: 20.07.2016
(51) Int. Cl.: H02P 27/04, F25B 49/02, H02M 5/458, H02P 1/42, H02P 1/44

(54) **ANSTEUERVORRICHTUNG FÜR EINEN KÜHLGERÄTEKOMPRESSOR, SYSTEM UND VERWENDUNG**
DEVICE FOR DRIVING A REFRIGERATOR COMPRESSOR, SYSTEM AND USE
DISPOSITIF DE COMMANDE POUR UN COMPRESSEUR D'APPAREIL REFRIGERATEUR, SYSTEME ET UTILISATION

(43) Veröffentlichungstag der Anmeldung: 24.01.2018
(73) Patentinhaber: Eppendorf SE, 22339 Hamburg (DE)
(72) Erfinder: Uhlendorf, Rüdiger, 37127 Dransfeld (DE); Poole, Garry, Maldon, Essex CM9 6AR (GB); Mason, George, Maldon, Essex CM9 4LJ (GB); Kao, Ted, 11200 TG Bungah, Penang (MY)
(74) Vertreter: Patent- und Rechtsanwälte Behrmann Wagner PartG mbB

(56) Entgegenhaltungen:
- WO-A1-03/044939
- JP-A- 2002 112 588
- US-A1- 2012 187 764
- US-B2- 8 011 191

## Beschreibung

Die vorliegende Erfindung betrifft eine Ansteuervorrichtung für einen mindestens einen zweiphasigen Wechselstrom-Asynchronmotor aufweisenden Kühlgerätekompressor. Ferner betrifft die vorliegende Erfindung ein System aufweisend eine derartige Ansteuervorrichtung in Verbindung mit einem zwei Wechselstrom-Asynchronmotoren aufweisenden Kühlgerätekompressor, und die vorliegende Erfindung betrifft eine Verwendung sowohl einer solchen Ansteuervorrichtung, als auch eines solchen Systems zur Realisierung eines Kühlgeräts in tiefen Kühltemperaturbereichen.

Gattungsgemäße Ansteuervorrichtungen sowie damit angesteuerte Kühlgerätekompressoren von Kühlgeräten betreffen insbesondere das Gebiet der sogenannten ultra-niedrigen Kühlgeräte (Ult = Ultra-low temperature freezers), wobei derartige Kühlgeräte, üblicherweise für industrielle bzw. Forschungszwecke eingesetzt, einen Nutzkühlbereich auf einer Kühltemperatur unterhalb von -40°C, typischerweise sogar unterhalb von -60°C bis hin zu -80°C und darunter halten können. Dabei ist ein typischer Einsatzzweck dieser Vorrichtungen eine Langzeitkühlung, d.h. geeignet als Kühlgut einzusetzende biologische oder medizinische Proben od.dgl. Inhaltsstoffe werden üblicherweise mehrere Wochen oder gar Monate auf diesen Zieltemperaturen aufbewahrt, so dass die gattungsgemäße Kühltechnologie auf einen Kühl-Dauerbetrieb mit entsprechenden Kühlgeräten eingerichtet ist, welche selbst üblicherweise eine elektrische Leistungsaufnahme von typischerweise ca. 1,2 kW (in einem stationären Zustand bei einer Kühltemperatur unter -50°C) aufweisen. Entsprechend ist der elektrische Energieverbrauch bei dieser Technologie im Bereich von ca. 15 kW bis 20 kW pro Tag hoch.

Als aus dem Stand der Technik ist es dabei als bekannt vorauszusetzen, die angestrebten niedrigen Zieltemperaturen nicht lediglich mit einem einzelnen, üblicherweise einen Wechselstrom-Asynchronmotor als Kompressormotor aufweisenden Kühlmittelzweig im Rahmen der Kompressoreinheit vorzusehen, vielmehr ist es bekannt, eine zweistufige Anordnung, welche dann entsprechend auch zwei Kompressormotoren vorsieht, einzusehen. Diesbezüglich offenbart etwa die zum allgemeinen technologischen Hintergrund der vorliegenden Erfindung heranzuziehende US 8,011,191 B2 eine Kaskadenanordnung aus zwei Kühlmittelkreisläufen mit jeweiligen Kompressormotoren im Gebiet der Ultra-Tieftemperaturkühlgeräte unterhalb -40°C, wobei ein erster Kühlkreislauf über einen Dampfkondensator mit der Betriebsumgebung interagiert, während dann ein vom ersten Kühlkreislauf erzeugtes Kältevolumen durch einen zweiten Kühlkreislauf weiter herabgekühlt wird, um die angestrebten Werte von bis zu -80°C und darunter betriebssicher zu erreichen. Bereits aus diesem Stand der Technik ist es bekannt, die Zieltemperatur als Dauer-Betriebstemperatur, nach einem Herabkühlen, durch geeignetes, thermostat- bzw. sensorgesteuertes Ein- bzw. Ausschalten der als Kompressormotoren dienenden Wechselstrom-Asynchronmotoren sicherzustellen.

Die US 8,011,191 B2 setzt sich bereits mit Nachteilen dieses Standes der Technik auseinander und bemängelt etwa eine fehlende Effizienz im Hinblick auf den Energieverbrauch einer solchen Anordnung; so sind die Kühlkreisläufe und damit die jeweiligen Betriebsleistungen der Motoren für eine Maximallast ausgelegt, welche zwar vorteilhaft während des Herunterkühlens ist, im stationären Kühlbetrieb auf der Zieltemperatur dann jedoch nicht mehr benötigt wird. Dabei bemängelt insbesondere der genannte Stand der Technik den Umstand, dass das Ein- und Ausschalten der Motoren neben den Effizienznachteilen auch mechanische Probleme mit sich bringt sowie Vibrations- und Geräuschentwicklung begünstigt.

Die US 8,011,191 B2 beschreitet den Weg, dieses Problem durch eine drehzahlvariable Ansteuerung der Kompressormotoren zu lösen und sieht insbesondere vor, zum Zweck der Lastreduktion, also etwa nach einem Erreichen der Zieltemperatur nach einem Herabkühlen und der Notwendigkeit diese (lediglich) auf diesem Pegel zu halten, zu diesem Zweck dann die Motordrehzahl geeignet abzusenken.

Während dieser Lösungsweg prinzipiell elegant erscheint und eine Variabilität der Kompressormotorleistung(en) ermöglicht, ist gleichwohl auch dieser bekannte Ansatz nicht ohne Nachteil: So ist einerseits der für eine Drehzahlregelung erforderliche Ansteuerungs- und Motoraufwand deutlich erhöht, wobei hier zu berücksichtigen ist, dass die elektrischen Nennleistungen im Kilowattbereich liegen, also erheblicher steuerungstechnischer Aufwand in Verbindung mit einer entsprechenden Motorauslegung erforderlich ist. Hinzu kommt der Umstand, dass, im sensiblen technischen Gebiet der Ultra-Niedrigtemperatur-Kühlgeräte, jede zusätzliche erforderliche Kompressorzuleitung, etwa eine Durchleitung eines Kabels für einen Geschwindigkeitssensor od.dgl., Dichtungs- und Wärmebrückenprobleme erzeugt und somit prinzipiell nachteilig ist.

Hinzu kommt beim genannten Stand der Technik gemäß US 8,011,191 B2 das Problem, dass wiederum auch hier nur mit deutlich erhöhtem weiterem Schaltungsaufwand eine Anpassung der Motoransteuerung an verschiedene Netzspannungssysteme bzw. vorgegebene Netzspannungen eines jeweiligen Versorgungsnetzes möglich ist. Im übrigen Stand der Technik ist es ansonsten nämlich bekannt, entsprechend einer jeweiligen Region (Nordamerika, Japan, Europa usw.) und entsprechend dem dort geltenden Wechselspannungsnetz jeweils geeignete Kompressormotoren einzusetzen und der geltenden Netzspannung (samt jeweiliger Frequenz, typischerweise 50 Hz oder 60 Hz) zuzuordnen. Bei lediglich einfacher Ein-/Ausschaltung führt dies dann zu einem unproblematischen Betrieb an einem solchen Netz, erfordert aber natürlich, etwa im Hinblick auf eine universelle Verwendbarkeit einer Motor-Ansteuerung für verschiedene Wechselspannungen und Wechselspannungsnetze, einen jeweils angepassten Asynchronmotor. Auch hier besteht erkennbar Verbesserungsbedarf, nicht zuletzt als das Bedürfnis besteht, ein Kühlgerät der vorliegenden gattungsgemäßen Art an verschiedenen Netzspannungen und Netzfrequenzen, typischerweise im Bereich zwischen 100 V und 230 V, 50 Hz bis 60 Hz, flexibel und ohne grundlegenden Umbau betreiben zu können.

Schließlich bieten die jeweiligen Netzspannungsumgebungen aus (üblicherweise öffentlichen) Versorgungsnetzen noch eine weitere Herausforderung, die sich auf die Dimensionierung bzw. Ausgestaltung von Kühlgerätekompressoren samt zugeordneter Ansteuerung auswirkt: Üblicherweise ist, entsprechend einer jeweiligen Netzspezifikation eines Territoriums oder eines Landes, dieses Wechselspannungs-Versorgungsnetz mit einer maximal aufzunehmenden Stromstärke belastbar, welche nicht überschritten werden darf. Zwar lassen sich für besondere Anwendungen dann natürlich auch Verbrauchsstellen für höhere Stromstärken einrichten, diese erzeugen jedoch, neben dem zusätzlichen Aufwand, unverhältnismäßig hohe Kosten. Es nicht erkennbar, dass die Vorrichtung gemäß US 8,011,191 B2 im Hinblick auf einen (maximalen) Stromverbrauch hier eine Optimierung erfahren hätte.

Die WO 03/044939 A1 offenbart ein Verfahren zur Drehzahlregelung eines Elektromotors mittels eines Frequenzumrichters und einen Frequenzumrichter, der das Verfahren anwendet. Der Frequenzumrichter kann an eine von mehreren verschiedenen Netzspannungen angeschlossen werden und ist eine sogenannte Mehrspannungseinheit. Bei Anschluss an eine niedrigere Nennspannung als diejenige, für die der Frequenzumrichter ausgelegt ist, oder wenn die Netzspannung abfällt, benötigt der Frequenzumrichter einen größeren Strom vom Netz, um die Leistungsanforderungen des Motors zu erfüllen. Dies kann jedoch den Eingang des Frequenzumrichters aufgrund eines zu großen Stroms beschädigen. Um dies zu verhindern ist vorgesehen, dass die maximale Ausgangsleistung des Frequenzumrichters begrenzt wird, wenn die tatsächliche Netzspannung niedriger ist als die maximale nominale Netzspannung, für die der Frequenzumrichter ausgelegt ist, wobei während der Begrenzung der Frequenzumrichter die Drehzahl des Motors innerhalb eines Leistungsbereichs bis zur begrenzten maximalen Ausgangsleistung regelt.

Zum Stand der Technik sind zudem die JP 2002 112588 A sowie die US 2012/187764 A1 bekannt.

Aufgabe der vorliegenden Erfindung ist es daher, eine Ansteuervorrichtung für einen mindestens einen zweiphasigen Wechselstrom-Asynchronmotor aufweisenden Kühlgerätekompressor zu schaffen, welcher einfach in der (hardware-)technischen Realisierung ist, insbesondere ohne komplexe Steuerelektronik für eine Drehzahländerung des Kompressormotors auskommt, dabei in der Lage ist, die Energieeffizienz durch Absenkung des elektrischen Energieverbrauchs insbesondere in einem stationären Kühlbetrieb nach einem Temperaturabsenken sicherzustellen und dabei zusätzlich dafür sorgt, dass versorgungsnetz-immanente Belastungsgrenzen im Hinblick auf einen zu verbrauchenden Maximalstrom in keinem Betriebszustand überschritten werden.

Die Aufgabe wird durch die Ansteuervorrichtung mit den Merkmalen des Hauptanspruchs gelöst; vorteilhafte Weiterbildungen der Erfindung sind in den Unteransprüchen beschrieben. Zusätzlich Schutz im Rahmen der vorliegenden Erfindung wird beansprucht für ein System aufweisend eine derartige erfindungsgemäße Ansteuervorrichtung mit (mindestens) zwei Wechselstrom-Asynchronmotoren zur Realisierung des Kühlgerätekompressors als kaskadierte, gestufte Einheit, wie sie etwa exemplarisch in der US 8,011,191 B2 beschrieben ist. Schließlich ist im Rahmen der vorliegenden Erfindung eine Verwendung einer derartigen erfindungsgemäßen Ansteuervorrichtung oder eine Verwendung eines solchen Systems beansprucht, welches ein Kühlgerät mit einer Kühlzieltempertur < -40°C, bevorzugt < -60°C, weiter bevorzugt < -75°C, realisieren soll.

In erfindungsgemäß vorteilhafter Weise beschreitet die vorliegende Erfindung einen anderen Weg als der oben zitierte Stand der Technik: Erfindungsgemäß wurde nämlich erkannt, dass eine Anordnung aus ersten und zweiten Spannungswandlermitteln nicht nur eine flexible Anpassung an verschiedene Eingangs-(Netz-)Spannungen mit verschiedenen Netzfrequenzen, wie durch ein jeweiliges Versorgungsnetz vorgegeben, ermöglichen kann, auch gestattet es eine derartige Architektur ausgangsseitig, d.h. im Hinblick auf anzuschließende, als Wechselstrom-Asynchronmotor ausgebildete Kompressormotoren, diese mit einem Wechselspannungs-Ausgangssignal zu versehen, welches auf verschiedenen Spannungspegeln einstell- bzw. vorgebbar ist - dies basiert auf der Erkenntnis, dass, etwa bei einem Maximalleistungs-Herunterkühlbetrieb, eine höhere Wechselspannung angelegt wird als während eines späteren, die Konstanthaltung der Zieltemperatur betreffenden stationären Kühlbetriebs, so dass insoweit die Spannungswandlermittel hierfür die technischen Voraussetzungen schaffen.

Zusätzlich erfindungsgemäß sind Spannungsdetektormittel zum Erfassen der Netzwechselspannung vorgesehen, wobei deren Detektorausgangssignal von den Spannungswandlermitteln verwendet wird, um einen Stromhöchstwert für das Ausgangssignal festzulegen bzw. einzuprägen, entsprechend der Belastbarkeit des jeweiligen Versorgungsnetzes.

Damit erreicht die vorliegende Erfindung, ohne die Notwendigkeit einer Drehzahländerung oder Drehzahlregelung des mindestens einen Wechselstrom-Asynchronmotors, ein optimiertes Betriebsverhalten mit bester Energieeffizienz, ohne dass etwa die Gefahr besteht, dass eine zu hohe Stromaufnahme mit den Bedingungen des jeweiligen (flexibel und variabel anschließbaren) Versorgungsnetzes inkompatibel ist.

In erfindungsgemäßer Weise sorgen damit die Spannungswandlermittel mithilfe der dem Nutzkühlbereich des Kühlgerätes zuordenbaren Temperatursensormittel und durch Wirkung zugeordneter Betriebsmodusmittel dafür, dass als Reaktion auf eine von den Temperatursensormitteln erfasste Temperatur oberhalb eines Schwellwertes, also etwa einer KühlZieltemperatur des Nutzkühlbereichs, die Betriebsmodusmittel einen Betrieb der zweiten Spannungswandlermittel zum Erzeugen des Ausgangssignals auf einem ersten Ausgangswechselspannungspegel bewirken, welcher (während dieser Ansteuerphase) bevorzugt konstant sein kann und während dieser Phase auch eine Stromaufnahme des angeschlossenen (mindestens einen) Motors bis zum Stromhöchstwert gestattet. Dagegen wird als Reaktion auf eine den Schwellwert erreichende oder unterschreitend erfasste Temperatur durch Wirkung der Betriebsmodusmittel ein Betrieb der Spannungswandlermittel zum Erzeugen des Ausgangssignals auf einem abgesenkten zweiten Ausgangswechselspannungspegel bewirkt. Dies basiert auf der Erkenntnis, dass eine damit erreichte verminderte Motorleistung (bei konstanter Motordrehzahl, insoweit entsprechend dann konstantem Fördervolumen) ausreichend ist, um, etwa mit dem Zweck der Konstanthaltung der Zieltemperatur nach erfolgter Herunter- bzw. Abkühlung, eine signifikante Energieverbrauchsverminderung des bzw. der Motors/en zu erreichen. Bei einem typischen ersten Ausgangswechselspannungspegel von an z.B. 230V kann dieser zweite, abgesenkte Ausgangswechselspannungspegel bis zu 150V oder sogar noch darunter sinken, sodass erfindungsgemäß vorteilhaft und weiterbildend ein Verhältnis dieses zweiten, abgesenkten Ausgangswechselspannungspegels zum ersten Ausgangswechselspannungspegel (bezogen auf die Effektivwerte) üblicherweise < 0,8 beträgt und im bevorzugten Bereich zwischen 0,6 und 0,75 liegt.

Im Rahmen der mittels der vorteilhaften Temperatursensormittel ermöglichten Temperaturreduktion des Nutzkühlbereichs liegt die weitere bevorzugte Weiterbildung der Erfindung darin, beim Einsatz von zwei kaskadiert mit jeweils zugeordneten Kühlkreisläufen eingesetzten Asynchronmotoren als jeweiligem Kompressormotor, diese Kühlkreisläufe mittels der jeweils zugeordneten Motoren getrennt und temperaturabhängig zu aktivieren. Erfindungsgemäß geschieht dies dadurch, dass in einem Kühlbetrieb bis zu einem Erreichen oder Unterschreiten eines ersten oberen Temperaturschwellwertes (typischerweise etwa -40°C bei einem tieferen Ziel- und Betriebstemperaturwert von z.B. -80°C) nur der erste Wechselstrom-Asynchronmotor mit Wechselstrom-Ausgangsignalen versehen wird, während nach dem Erreichen oder Unterschreiten dieses Schwellwertes der zweite Wechselstrom-Asynchronmotor für den zweiten, kaskadiert vorgesehenen und insoweit analog des diskutierten Standes der Technik ausgebildeten Kühlkreislauf angesteuert wird.

Die den Netzanschlussmitteln zugeordneten Spannungsdetektormitteln ermöglichen gemäß einer weiteren bevorzugten Weiterbildung der Erfindung, die zweiten Spannungswandlermittel so auszugestalten, dass diese eine Ansteuerung bzw. Versorgung des bzw. der angeschlossenen Motors/en dann unterbrechen, wenn das detektierte Netzspannungspotential daraufhin deutet, dass mit Erreichen bzw. Überschreiten des Stromhöchstwertes sich die Vorrichtung außerhalb eines vorgesehenen bzw. zulässigen Betriebsbereichs befindet. Mithin sorgt die Ansteuervorrichtung gemäß dieser Ausführungsform dafür, dass in einem solchen Fall das Ausgangssignal unterbrochen wird, also die Signalversorgung des/der Motors/en endet.

Im Ergebnis gestattet es die Erfindung in überraschend eleganter und einfacher Weise, mindestens einen einphasigen, zweipoligen Wechselstrom-Asynchronmotor (mit zusätzlicher, etwa mittels eines Kondensators, alternativ elektronisch, realisierter Hilfsphase) als Zweipol bzw. mittels eines Zweidrahtanschlusses (bzw. Dreidraht bei elektronisch generierter Hilfsphase) anzusteuern, ohne dass etwa eine komplexe Drehzahlregelung erfolgt bzw. für diesen Zweck eine Drehzahldetektion oder dergleichen Sensorsignale verarbeitet werden, und auch ohne dass etwa, zusätzlich aufwendig, ausgangsseitig der Ansteuervorrichtung im Hinblick auf den Verbraucher (Motor) eine zusätzliche Strommessung bzw. Stromerfassung stattfindet. Dies wird im Rahmen der vorliegenden Erfindung elegant mittels der erfindungsgemäßen netzeingangsseitigen Spannungsdetektormittel realisiert.

Es ist damit zu erwarten, dass gemäß der vorliegenden Erfindung realisierte Kühlgerätekompressorsysteme, nicht zuletzt aufgrund ihrer universellen Verbindbarkeit mit einer Vielzahl von Netzspannungsumgebungen und einem signifikant reduzierten elektrischen Energieverbrauch, eine weite Verbreitung finden werden, sodass zwar eine Verwendung im Rahmen eines Kühlgeräts für Ultra-Niedrigtemperaturen der eingangs diskutierten Bereiche bevorzugt ist, aber nicht die Einsatzbreite der vorliegenden Erfindung beschränkt.

So ermöglicht es etwa die vorliegende Erfindung im eingangs beschriebenen Niedrigtemperatur-Kontext, die typische Leistungsaufnahme einer zweistufigen Kühlvorrichtung bei Kühltemperaturen unter -50°C von ca. 1,2 kW auf 0,8 kW oder darunter abzusenken. Über einen größeren Zeitraum, welcher insbesondere auch verschiedene Betriebsphasen einschließt, sollte im Regelfall eine Energieeinsparung von mindestens 15 % erreichbar sein.

Weitere Vorteile, Merkmale und Einzelheiten der Erfindung ergeben sich aus der nachfolgenden Beschreibung bevorzugter Ausführungsbeispiele sowie anhand der Figuren.

Diese zeigen in:
- Fig. 1:: ein Blockschaltbild der erfindungsgemäßen Ansteuervorrichtung für einen Kühlgerätekompressor mit zwei angesteuerten Wechselstrom-Asynchronmotoren gemäß einem ersten bevorzugten Ausführungsbeispiel der Erfindung und
- Fig. 2:: eine Diagrammdarstellung mit der elektrischen Leistungsaufnahme bzw. dem Drehmomentverhalten eines der Asynchronmotoren im Ausführungsbeispiel gegenüber der anliegenden Versorgungsspannung.

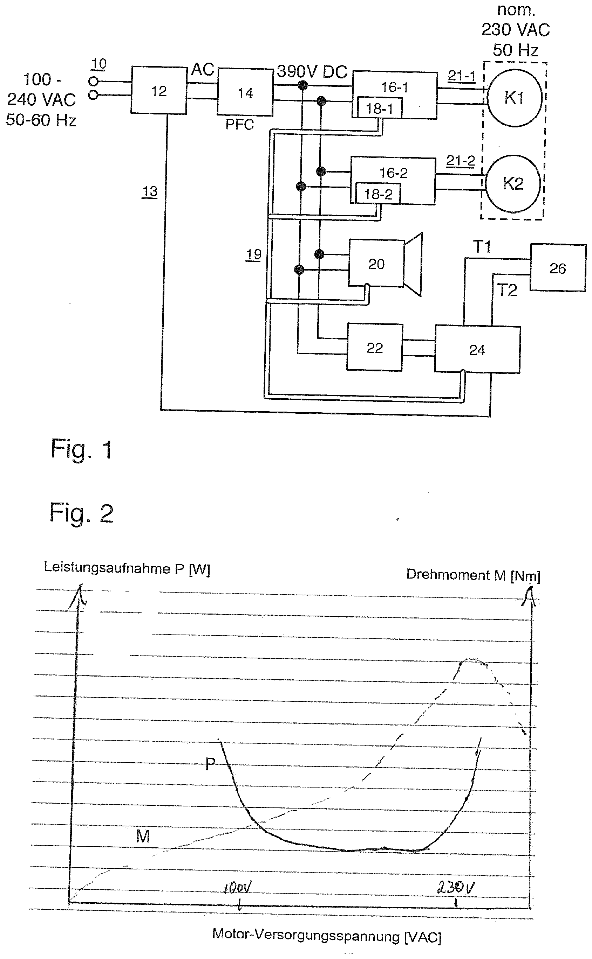

Das Schema-Blockschaltbild der Fig. 1 zeigt die wesentlichen Funktionskomponenten zur Realisierung der erfindungsgemäßen Ansteuervorrichtung gemäß dem ersten bevorzugten Ausführungsbeispiel. Ansteuerbar sind hier zwei Wechselstrom-Asynchronmotoren K1, K2, die jeweils für eine Wechselspannung von 230 V bei 50 Hz ausgelegt sind. In ansonsten bekannter Weise, etwa insoweit auch gemäß US 8,011,191 B2, sind die den Motoren K1, K2 jeweils zugeordneten Kühlkreise miteinander verbunden bzw. kaskadiert, dergestalt, dass ein dem Kompressormotor K1 zugeordneter erster Kühlkreislauf mit der Außenumgebung der Vorrichtung - diese ist in nicht gezeigter Weise in einem üblichen Gehäuse bzw. Schrank eines Ultra-Niedrigtemperatur-Kühlgerätes (ULT) eingebettet - in Wechselwirkung tritt, während, angekoppelt an diesen ersten Kühlkreis mittels eines nicht gezeigten Wärmetauschers, ein zweiter Kühlkreis durch Wirkung des Kompressormotors K2 eine am Wärmetauscher durch den ersten Kühlkreislauf erzeugte Kühltemperatur weiter bis zu einer Ziel- bzw. Nutzkühltemperatur eines (gleichermaßen nicht gezeigten) Kühlraums absenkt.

Die gezeigte Anordnung aus zwei Kompressormotoren K1, K2 ist betreibbar an (öffentlichen) Versorgungsnetzen in einem breiten Eingangsspannungsbereich zwischen 100 V und 240 V Wechselspannung, wie sie an Netzanschlussmitteln 10, etwa üblichen und nicht für einen Höchststrombetrieb gesondert konfigurierten Netzsteckdosen, anliegen. Dabei ist das gezeigte Ausführungsbeispiel so ausgelegt, dass es entsprechend einer für eine Region vorgesehenen Maximalstromaufnahme aus dem Versorgungsnetz in nachfolgend noch zu beschreibender Weise geltende Höchstgrenzen nicht übersteigt; dies betragen etwa bei einem 230 V/50 Hz-Versorgungsnetz in Großbritannien 13 A, dagegen 15 A bei einem japanischen 100 V/50 Hz-Versorgungsnetz, dabei jeweils ohne die Notwendigkeit, in aufwendiger und kostenträchtiger Weise durch zusätzliche Versorgungsmaßnahmen diese Stromschwellen zu erhöhen.

Eingangsseitig den Netzanschlussmitteln nachgeschaltet ist bei dem gezeigten Ausführungsbeispiel der Fig. 1 eine Leistungserfassungseinheit 12, welche insbesondere auch eine Spannungsdetektorfunktionalität einer am Netzanschluss 10 anliegenden (AC) Wechselspannung aufweist. Ein Detektorausgangssignal dieser Detektormittel 12 liegt über eine Steuerleitung 13 einer nachfolgend im Detail zu erläuternden Modus- und Ansteuereinheit 24 an.

Das vom öffentlichen Versorgungsnetz bereitgestellte Wechselspannungs-Eingangssignal wird mittels einer zweistufigen Wandler- bzw. Invertereinheit in das jeweilige Ausgangssignal zum Ansteuern der Asynchronmotoren K1, K2 umgesetzt, und zwar zunächst mittels einer ersten Wandlerstufe 14, welche in ansonsten bekannter Weise eine Umsetzung des anliegenden Wechselspannungs-Eingangssignals in eine 390 V-Gleichspannung vornimmt, dabei zusätzlich mit einer Leistungsfaktorkorrektur (PFC) versehen ist, die im vorliegenden Fall als aktive Leistungsfaktorkorrektur ausgestaltet ist, nämlich in ansonsten bekannter Weise (und im Schaltbild nicht im Detail gezeigt) mittels eines großen Kondensators den Verlauf des aufgenommenen Stroms weitgehend der (sinusförmigen) Netzspannung nachführt.

Dieser ersten, den Aufwärtswandler aufweisenden Stufe 14 folgt im schematischen Blockschaltbild der Fig. 1 ein Paar von zweiten Wandlerbaugruppen 16-1, 16-2, welche den Asynchronmotoren K1 bzw. K2 zugeordnet und vorgeschaltet sind. Diese zweiten Wandlerstufen setzen das 390 V-Gleichspannungssignal in eine Wechselspannung als Steuerspannung für die Asynchronmotoren um, welche, im dargestellten Ausführungsbeispiel, auf Zweidraht-Ausgangsleitungen 21-1, 21-2 anliegt, wobei dann die jeweiligen Hilfsphasen der Asynchronmotoren K1, K2 durch darin vorgesehene, nicht im Detail gezeigte Kondensatoren erzeugt werden.

Die Höhe der ausgangsseitigen Wechselspannung als jeweiliger Motor-Versorgungsspannung wird bestimmt durch eine schematisch mit dem Bezugszeichen 18-1 (für die Wandlerbaugruppe 16-1) bzw. 18-2 (für die Wandlerbaugruppe 16-2) bezeichnete Steuereinheit, welche mittels einer Busleitung 19 von der Modus-Steuereinheit 24 ein Spannungssteuersignal entsprechend der für den jeweiligen Asynchronmotor K1, K2 zu erzeugenden bzw. anzulegenden Wechselspannung empfängt. Die Baugruppen 16, 18 bestehen in ansonsten bekannter Weise aus durch die Steuereinheit 18 geschalteten Leistungs-Halbleiterpaaren (HS, LS), etwa gemäß einer Halbbrücken-Topologie, und realisieren insoweit eine Schaltnetzteilfunktionalität mit steuersignalabhängiger Wechsel-Ausgangsspannung.

Die Höhe dieser an K1, K2 anliegenden bzw. anzulegenden Steuerspannung als Ausgangssignal der zweistufigen Wandlervorrichtung wird bestimmt durch die Modus- und Steuereinheit 24, welche insbesondere abhängig ist von Temperatureingangssignalen T1, T2 einer Temperatursensoreinheit 26. Dabei ist im vorliegenden Ausführungsbeispiel der Temperaturwert T1 ein Temperatursignal, welches einer Wärmetauschertemperatur bzw. einer Verbindungs- und Übergangstemperatur zwischen den den Motoren zugeordneten Kühlkreisläufen entspricht. Dies sorgt vorteilhaft dafür, dass zunächst bis zum Erreichen eines Temperaturschwellwerts, etwa am genannten Wärmetauscher, beim Herabkühlen überhaupt nur der erste Kompressormotor K1 aktiviert wird. Sobald dann dieser Schwellwert erreicht bzw. nach unten durchbrochen wird, was typischerweise einer auf eine Ziel- bzw. Soll-Temperatur der Gesamtanordnung von -80° C eingerichteten Vorrichtung etwa -40° C entspricht, wird (zusätzlich) der zweite Kompressormotor K2 aktiviert und setzt mit dem zugehörigen Kühlkreislauf die Temperatur weiter herab. Das Temperatursignal T2, ausgegeben von der Temperatursensoreinheit 26, beschreibt im gezeigten Ausführungsbeispiel die Temperatur des Nutzkühlbereichs, also der Kammer oder des Bereichs der Kühlvorrichtung, in welcher dann später das Kühlgut auf der Zieltemperatur (also hier etwa -80° C) aufbewahrt werden soll. Auf der Basis des Temperatursignals T2, und insbesondere mit dem Erreichen dieser Zieltemperatur, erfolgt in nachfolgend zu beschreibender Weise eine Veränderung der Motor-Versorgungsspannung durch entsprechende Ansteuerung der zweiten Inverterstufen 16-1, 16-2, nämlich insbesondere eine Absenkung der (jeweiligen) Motorversorgungsspannung zur Energieeinsparung - während bis zum Zeitpunkt dieses Erreichens der Zieltemperatur, nämlich beim Herabkühlen, im Regelbetrieb der Motor K1 bzw. dann auch K2 bei Nenn- bzw. Nominalspannung (230 V) betrieben werden.

Diese Zusammenhänge verdeutlicht das für einen jeweiligen der Kompressormotoren K1, K2 aufgenommene Leistungs- und Drehmomentdiagramm der Fig. 2: Es hat sich nämlich erfindungsgemäß vorteilhaft herausgestellt, dass insbesondere mit dem Erreichen der Zieltemperatur und zum Konstanthalten der Zieltemperatur das hohe Motordrehmoment, bewirkt durch eine AC-Ansteuerspannung am oder in der Nähe des Nominalwerts von 230 V, nicht mehr notwendig ist. Wie diesbezüglich die gestrichelte Drehmomentkurve der Fig. 2 verdeutlicht, sinkt mit fallender Motor-Versorgungsspannung an K1 bzw. K2 zwar das erzeugte Drehmoment (bei nach wie vor jedoch gleichbleibender Drehzahl - diese bleibt im vollständigen Steuerbereich unverändert und wird insbesondere nicht geregelt), dieses niedrigere Drehmoment ist jedoch, entsprechend **den** vorliegenden Druckbedingungen in den Kühlkreisläufen, ausreichend, um das Kühlverhalten im stationären bzw. Dauer-Kühlzustand sicherzustellen. Entsprechend erfolgt im Rahmen der vorliegenden Erfindung mit dem Erreichen der Zieltemperatur ein Absenken der Motor-Versorgungsspannung, typischerweise bis herunter auf 140 V bis 150 V, was entsprechend der durchgezogenen Kurve in der Diagrammdarstellung der Fig. 2 eine signifikante Verringerung der elektrischen Leistungsaufnahme des betreffenden Motors bedeutet. Im Rahmen der Erfindung hat es sich nämlich als vorteilhaft herausgestellt, auch bei derartig abgesenkten Wechselspannungs-Versorgungsspannungen einen runden und unterbrechungsfreien Lauf der Kompressormotoren erreichen zu können, wobei, angesichts des niedrigeren benötigten Drehmoments, nach wie vor das notwendige Fördervolumen bzw. die Förderleistung - bei konstanter Drehzahl - erreicht wird.

Wie die Fig. 1 im Blockschaltbild noch zusätzlich zeigt, erzeugt eine Spannungsversorgungseinheit 22 als zusätzliche Wandlereinheit aus der 390 V-Gleichspannung eine Versorgungsspannung für die Modus- und Steuereinheit 24, und zusätzlich ist auch mit dem Bezugszeichen 20 eine schematische Lüftereinheit gezeigt, welche, entsprechend einer zusätzlichen Ansteuermöglichkeit über den Bus 19, in geeigneter Weise in den Kühlbetrieb zusätzlich eingreifen kann.

Die vorliegende Erfindung ist nicht auf das gezeigte Ausführungsbeispiel oder die darin genannten Parameter beschränkt. Dabei sind sowohl die Temperatur- und Spannungsbereiche nahezu beliebig variierbar. Auch ist die Anordnung aus zwei kaskadierten Kühlkreisläufen mit jeweils einem zugeordneten Asynchron-Wechselspannungsmotor vorteilhaft, die Erfindung ist jedoch nicht auf diese Konfiguration beschränkt. Schließlich ist die vorliegende Erfindung günstig zur Realisierung eines Kühlgeräts für den ultra-niedrigen Temperaturbereich, typischerweise < -50° C, weiter bevorzugt < -70° C, geeignet, unabhängig davon ist jedoch die erfindungsgemäße Ansteuervorrichtung auch für andere Verwendungen denkbar.

## Patentansprüche

1. Ansteuervorrichtung für einen zweiphasige Wechselstrom-Asynchronmotoren (K1, K2) aufweisenden Kühlgerätekompressor mit
Netzanschlussmitteln (10) zum Verbinden mit einem eine Netzwechselspannung zwischen 85 V und 264 V, insbesondere zwischen 100 V und 230 V, nominal anbietenden, bevorzugt öffentlichen Spannungsversorgungsnetz,
den Netzanschlussmitteln nachgeschalteten ersten Spannungswandermitteln (14) zum Erzeugen einer Zwischenspannung, insbesondere Zwischengleichspannung, aus der Netzwechselspannung, den ersten Spannungswandlermitteln nachgeschalteten zweiten Spannungswandlermitteln (16-1, 16-2) zum Erzeugen eines von einem Pegel und einer Netzfrequenz der Netzwechselspannung unabhängigen, insbesondere zeitabschnittsweise spannungs- und/oder frequenzkonstanten Ausgangssignals zum Ansteuern des Kühlgerätekompressors mit einer Wechselspannung einer Mehrzahl verschieden vorgebbarer Spannungspegel,
wobei den Netzanschlussmitteln Spannungsdetektormittel (12) zum Erfassen der Netzwechselspannung zugeordnet sind, deren Detektorausgangssignal von den zweiten Spannungswandlernmitteln oder diesen zugeordneten Ansteuermitteln (24) zum Erzeugen eines netzspannungsabhängigen Höchstwerts für einen Strom des Ausgangssignals ausgewertet werden kann,
**dadurch gekennzeichnet,**
**dass** den zweiten Spannungswandlermitteln einem Nutzkühlbereich eines den Kühlgerätekompressor aufweisenden Kühlgeräts zuordenbare Temperatursensormittel (26) sowie Betriebsmodusmittel (24) so zugeordnet sind, dass als Reaktion auf eine von den Temperatursensormitteln erfasste Temperatur (T1) oberhalb eines Schwellwerts die Betriebsmodusmittel (24) einen Betrieb der zweiten Spannungswandlermittel zum Erzeugen des Ausgangssignals auf einem ersten, bevorzugt konstanten Ausgangswechselspannungspegel mit bis zu einem dem Strom-Höchstwert entsprechenden Maximalstrom bewirken, und als Reaktion auf eine den Schwellwert erreichende oder unterschreitende erfasste Temperatur die Betriebsmodusmittel einen Betrieb der zweiten Spannungswandlermittel zum Erzeugen des Ausgangssignals auf einem gegenüber dem ersten Ausgangswechselspannungspegel abgesenkten und bevorzugt konstanten zweiten Ausgangswechselspannungspegel bewirken, wobei die zweiten Spannungswandlermittel zum Erzeugen des Ausgangssignals für einen ersten und einen zweiten Wechselstrom-Asynchronmotor eines Kühlgerätekompressors so ausgebildet sind, dass in einem Kühlbetrieb bis zu einem Erreichen oder Unterschreiten des Schwellwerts das Ausgangssignal nur für den ersten Wechselstrom-Asynchronmotor erzeugt und ausgegeben wird, und nach dem Erreichen oder Unterschreiten des Schwellwerts das Ausgangssignal für den zweiten Wechselstrom-Asynchronmotor erzeugt und ausgegeben wird, und wobei ein an die zweiten Spannungswandlermittel angeschlossener oder anschließbarer Wechselstrom-Asynchronmotor zweipolig ohne darüber hinausgehende Sensor- und/oder Steuerleitungen angeschlossen oder anschließbar ist und Mittel zum Erzeugen einer Hilfsphase, insbesondere einen Kondensator oder elektronische Hilfsphasen-Erzeugungsmittel, aufweist..

2. Ansteuervorrichtung nach Anspruch 1, **dadurch gekennzeichnet, dass** ein Verhältnis des zweiten Ausgangswechselspannungspegels bezogen auf den ersten Ausgangswechselspannungspegel kleiner als 0,8 ist, bevorzugt im Bereich zwischen 0,6 und 0,75 liegt.

3. Ansteuervorrichtung nach einem der Ansprüche 1 oder 2, **dadurch gekennzeichnet, dass** die zweiten Spannungswandlermittel so ausgebildet sind, dass eine Versorgung des angeschlossenen Kühlmittelkompressors mit dem Ausgangssignal als Reaktion auf das Detektorausgangssignal der Spannungsdetektormittel unterbrochen wird, wenn ein einem aufgenommenen Strom entsprechender Wert des Detektorausgangssignals den Stromhöchstwert übersteigt.

4. Ansteuervorrichtung nach einem der Ansprüche 1 bis 3, **dadurch gekennzeichnet, dass** die ersten und die zweiten Spannungswandlermittel keine Drehzahlregelung eines angeschlossenen Gerätekompressors ausführen können und/oder kein einer Drehzahl des angeschlossenen Gerätekompressors entsprechendes oder von dieser abhängiges Signal empfangen können.

5. Ansteuervorrichtung nach einem der Ansprüche 1 bis 4, **dadurch gekennzeichnet, dass** die ersten Spannungswandlermittel eine Leistungsfaktorkorrektur (PFC), insbesondere eine aktive Leistungsfaktorkorrektur, realisieren.

6. Kühlgerätekompressorsystem aufweisend die Ansteuervorrichtung nach einem der Ansprüche 1 bis 5, sowie den zwei Wechselstrom-Asynchronmotoren aufweisenden Kühlgerätekompressor,
wobei die zweiten Spannungswandlermittel so ausgebildet sind, dass ein erster der Wechselstrom-Asynchronmotoren für einen Anlauf- und/oder Startbetrieb bei einer erfassten Kühltemperatur oberhalb des Schwellwerts,
und der zweite der Wechselstrom-Asynchronmotoren erst nach dem Unterschreiten des Schwellwerts angesteuert wird,
und wobei bevorzugt bei einer erfassten Kühlzieltemperatur die zweiten Spannungswandlermittel eine Spannungsabsenkung des die Wechselstrom-Asynchronmotoren ansteuernden Ausgangssignals vornehmen.

7. Verwendung der Ansteuervorrichtung nach einem der Ansprüche 1 bis 5 und/oder des Systems nach Anspruch 6 zur Realisierung eines Kühlgeräts, das auf einer Kühlzieltemperatur eines Nutzkühlbereichs des Kühlgeräts < -50° C, bevorzugt < -60° C weiter bevorzugt kleiner < -75° C, betreibbar ist.

## Claims

1. A controller for a cooling unit compressor having two-phase AC asynchronous motors (K1, K2), the controller comprising mains connection means (10) for connection to a preferably public voltage supply network nominally providing an AC mains voltage between 85 V and 264 V, in particular between 100 V and 230 V,
first voltage converter means (14) connected downstream of the mains connection means and serving to generate an intermediate voltage, in particular an intermediate DC voltage, from the AC mains voltage,
second voltage converter means (16-1, 16-2) connected downstream of the first voltage converter means and serving to generate an output signal, in particular a temporarily voltage-constant and/or frequency-constant output signal, which is independent from a level and from a mains frequency of the AC mains voltage and which serves to control the cooling unit compressor with an AC voltage of a plurality of different predeterminable voltage levels, voltage detection means (12) being assigned to the mains connection means, which serve to detect the AC mains voltage and whose detector output signal can be evaluated by the second voltage converter means or by controlling means (24) assigned to them in order to generate a maximum value dependent on the mains voltage for a current of the output signal,
**characterized in that**
temperature sensor means (26) and operating mode means (24) that can be assigned to a used cooling space of a cooling unit having the cooling unit compressor are assigned to the second voltage converter means in such a manner that in response to a temperature (T1) detected by the temperature sensor means being above a threshold, the operating mode means (24) cause the second voltage converter means for generating the output signal to operate on a preferably constant first output AC voltage level with up to a maximum current that corresponds to the maximum current value, and in response to a detected temperature reaching or dropping below the threshold, the operating mode means cause the second voltage converter means for generating the output signal to operate on a preferably constant second output AC voltage level which is lower than the first output AC voltage level, the second voltage converter means for generating the output signal for a first and a second AC asynchronous motor of a cooling unit compressor being configured in such a manner that in a cooling mode, the output signal is generated and outputted only for the first AC asynchronous motor until the temperature reaches or drops below the threshold,
and once the temperature reaches or drops below the threshold, the output signal for the second AC asynchronous motor is generated and outputted, and an AC asynchronous motor that is or can be connected to the second voltage converter means being connected or connectable via two phases without any additional sensor lines and/or control lines and having means for generating an auxiliary phase, in particular a capacitor or electronic means for generating an auxiliary phase.

2. The controller system according to claim 1, **characterized in that** a ratio of the second output AC voltage level with respect to the first output AC voltage level is less than 0.8, preferably in the range between 0.6 and 0.75.

3. The controller according to claim 1 or 2, **characterized in that** the second voltage converter means are configured in such a manner that a supply of the connected coolant compressor with the output signal is interrupted in response to the detector output signal of the voltage detector means if a value of the detector output signal which corresponds to a drawn current exceeds the maximum current value.

4. The controller according to any one of claims 1 to 3, **characterized in that** the first and the second voltage converter means cannot control the speed of a connected unit compressor and/or cannot receive a signal which corresponds to or depends on a speed of the connected unit compressor.

5. The controller according to any one of claims 1 to 4, **characterized in that** the first voltage converter means realize a power factor correction (PFC), in particular an active power factor correction.

6. A cooling unit compressor system comprising the controller according to any one of claims 1 to 5 and the cooling unit compressor having two AC asynchronous motors,
the second voltage converter means being configured in such a manner that a first one of the AC asynchronous motors is controlled for start-up and/or starting operation when a detected cooling temperature is above the threshold, and the second AC asynchronous motors is controlled only after the temperature has dropped below the threshold, and the second voltage converter means preferably lowering the voltage of the output signal controlling the AC asynchronous motors when a target cooling temperature is detected.

7. A use of the controller according to any one of claims 1 to 5 and/or of the system according to claim 6 for realizing a cooling unit that can be operated at a target cooling temperature of a used cooling space of the cooling unit of < -50 °C, preferably < -60 °C, more preferably less than < -75 °C.

## Revendications

1. Dispositif de commande pour un compresseur d'appareil de refroidissement ayant des moteurs (K1, K2) asynchrones à courant alternatif biphasés, le compresseur d'appareil de refroidissement comprenant
des moyens de raccordement au réseau (10) pour la connexion à un réseau d'alimentation en tension, de préférence public, offrant de manière nominale une tension alternative de réseau entre 85 V et 264 V, notamment entre 100 V et 230 V,
des premiers moyens de conversion de tension (14) disposés en aval des moyens de raccordement au réseau et servant à générer une tension intermédiaire, notamment une tension intermédiaire continue, à partir de la tension alternative de réseau,
des deuxièmes moyens de conversion de tension (16-1, 16-2) disposés en aval des premiers moyens de conversion de tension et servant à générer un signal de sortie indépendant d'un niveau et d'une fréquence de réseau de la tension alternative de réseau, ayant une tension et/ou une fréquence constante, notamment par intervalles de temps, et servant à commander le compresseur d'appareil de refroidissement au moyen d'une tension alternative d'une pluralité de niveaux de tension déterminables de manière différente,
dans lequel des moyens de détecteur de tension (12) sont assignés aux moyens de raccordement au réseau, les moyens de détecteur de tension (12) servant à détecter la tension alternative de réseau et leur signal de sortie de détecteur pouvant être évalué par les deuxièmes moyens de conversion de tension ou par des moyens de commande (24) assignés à ceux-ci pour générer une valeur maximale dépendante de la tension de réseau pour un courant du signal de sortie,
**caractérisé en ce que**
des moyens de capteur de température (26) et des moyens de mode de fonctionnement (24) qui peuvent être assignés à une zone de refroidissement utile d'un appareil de refroidissement qui a le compresseur d'appareil de refroidissement sont assignés aux deuxièmes moyens de conversion de tension de telle manière qu'en réponse à une température (T1) détectée par les moyens de capteur de température qui est supérieure à une valeur seuil, les moyens de mode de fonctionnement (24) entrainent un fonctionnement des deuxièmes moyens de conversion de tension pour générer le signal de sortie à un premier niveau de tension alternative de sortie, de préférence constant, jusqu'à un courant maximal qui correspond à la valeur maximale de courant, et, en réponse à une température détectée qui atteint ou est inférieure à la valeur seuil, les moyens de mode de fonctionnement entrainent un fonctionnement des deuxièmes moyens de conversion de tension pour générer le signal de sortie à un deuxième niveau de tension alternative de sortie, de préférence constant, qui est réduit par rapport au premier niveau de tension alternative de sortie, dans lequel les deuxièmes moyens de conversion de tension pour générer le signal de sortie pour le premier et le deuxième moteur asynchrone à courant alternatif d'un compresseur d'appareil de refroidissement sont réalisés de telle manière que, dans un mode de refroidissement, le signal de sortie est généré et émis uniquement pour le premier moteur asynchrone à courant alternatif jusqu'à ce que la température atteigne ou devienne inférieure à la valeur seuil,
et, lorsque la température a atteint ou devenu inférieure à la valeur seuil, le signal de sortie pour le deuxième moteur asynchrone à courant alternatif est généré et émis, et dans lequel un moteur asynchrone à courant alternatif qui est relié ou peut être relié aux deuxièmes moyens de conversion de tension est relié ou peut être relié de manière bipolaire sans lignes de capteur et/ou de commande supplémentaires et a des moyens pour générer une phase auxiliaire, notamment un condensateur ou des moyens de génération de phase auxiliaire électroniques.

2. Dispositif de commande selon la revendication 1, **caractérisé en ce qu'**un rapport du deuxième niveau de tension alternative de sortie par rapport au premier niveau de tension alternative de sortie est inférieur à 0,8, de préférence dans la plage entre 0,6 et 0,75.

3. Dispositif de commande selon la revendication 1 ou la revendication 2, **caractérisé en ce que** les deuxièmes moyens de conversion de tension sont réalisés de telle manière qu'une alimentation en signal de sortie du compresseur d'appareil de refroidissement en réponse au signal de sortie de détecteur des moyens de détecteur de tension est interrompue quand une valeur du signal de sortie de détecteur qui correspond à un courant consommé dépasse la valeur maximale de courant.

4. Dispositif de commande selon l'une quelconque des revendications 1 à 3, **caractérisé en ce que** les premiers et les deuxièmes moyens de conversion de tension ne peuvent pas effectuer une régulation de vitesse d'un compresseur d'appareil relié et/ou ne peuvent pas recevoir un signal qui correspond à ou est dépendant d'une vitesse du compresseur d'appareil relié.

5. Dispositif de commande selon l'une quelconque des revendications 1 à 4, **caractérisé en ce que** les premiers moyens de conversion de tension réalisent une correction de facteur de puissance (PFC), notamment une correction de facteur de puissance active.

6. Système de compresseur d'appareil de refroidissement comprenant le dispositif de commande selon l'une quelconque des revendications 1 à 5 et le compresseur d'appareil de refroidissement ayant deux moteurs asynchrones, dans lequel les deuxièmes moyens de conversion de tension sont réalisés de telle manière qu'un premier des moteurs asynchrones à courant alternatif est commandé à une température de refroidissement détectée qui est supérieure à la valeur seuil pour un fonctionnement de démarrage et/ou de mise en marche
et le deuxième des moteurs asynchrones à courant alternatif n'est commandé qu'après que la température de refroidissement détectée est inférieure à la valeur seuil,
et dans lequel, de préférence à une température cible de refroidissement détectée, les deuxièmes moyens de conversion de tension effectuent une réduction de tension du signal de sortie qui commande les moteurs asynchrones à courant alternatif.

7. Utilisation du dispositif de commande selon l'une quelconque des revendications 1 à 5 et/ou du système selon la revendication 6 pour réaliser un appareil de refroidissement qui peut fonctionner à une température cible de refroidissement d'une zone de refroidissement utile de l'appareil de refroidissement de < -50 °C, de préférence de < -60 °C, plus préférentiellement inférieure à < -75 °C.
